# EUROPEAN PATENT APPLICATION

(11) **EP 1 798 979 A1**
(43) Date of publication of application: **20.06.2007**
(21) Application number: 05790559.8
(22) Date of filing: 05.10.2005
(51) Int. Cl.: H04N 7/18

(54) **MONITORING DEVICE**

(30) Priority: 06.10.2004 JP 2004293345
(71) Applicant: MATSUSHITA ELECTRIC INDUSTRIAL CO., LTD., Osaka 571-8501 (JP)
(72) Inventor: ISHII, Hirofumi Mats. Elec.Ind.Co.Ltd. I.P.R.O.C., Chuo-ku Osaka-shi Osaka 540-6319 (JP)
(74) Representative: Grünecker, Kinkeldey, Stockmair & Schwanhäusser Anwaltssozietät
(86) International application number: PCT/JP2005/018435
(87) International publication number: WO 2006/038650

(57) **Abstract**

It is provided to a monitoring apparatus in which a supervisor can monitor intuitively and operate when the supervisor monitors a trespasser or the like in a building. The monitoring apparatus includes a plurality of cameras 1 for picking up images of the inside of the building and a displaying unit 4 for displaying an image obtained by pasting picked-up images onto surfaces of a floor, a passage, and a wall of the building by a texture mapping based on camera parameters of the plurality of cameras 1 and structure data of the building.

## Description

### Technical Field

The present invention relates to a monitoring apparatus for monitoring the inside of a building, or the like by cameras mounted in plural locations.

### Background Art

In the prior art, the monitoring apparatus for providing the cameras in respective locations in the inside of a building and concentrated-monitoring the images of these cameras at one location is put into practical use. However, when the supervisor monitors simultaneously a plurality of monitor images picked up by these cameras, such supervisor may lose sight of the trespasser, for example. Also, sometimes the supervisor is hard to understand intuitively which place of the building is monitored by a plurality of displayed monitoring images.

Such tendency is increased as the building to be monitored is increased in scale and the number of cameras is increased. Therefore, the human obligation is increased, e.g., the number of supervisors must be increased, the knowledge about room arrangement in the building, and the like are required beforehand of the supervisor, and the like.

Therefore, as the means for reducing such human obligation, the monitoring apparatus set forth in Patent Literature 1 has been proposed. This monitoring apparatus is constructed such that the trespasser is sensed based on the images of the monitoring sites picked-up by a plurality of cameras and the image output from the camera that sensed the trespasser is displayed on the monitor A, and also the function of displaying the output image of the selected camera on the monitor B is provided when other cameras are provided in a predetermined area around the direction along which the trespasser goes ahead. Since the images of the cameras that sensed the trespasser and the images of the cameras that will be expected to catch the trespasser subsequently can be offered selectively to the supervisor by this function, such an advantage can be achieved that the human obligation can be reduced (see Patent Literature 1, for example).
Patent Literature 1: JP-A-10-49498

### Disclosure of the Invention

### Problems that the Invention is to Solve

However, in this monitoring apparatus, such a drawback cannot be removed that the supervisor is hard to understand intuitively which place of the building is monitored by the displayed monitoring image. Also, since it is required of the supervisor that the supervisor should make a decision to check, recognize, or the like of the trespasser in a short time, there is such a possibility that error or missing may be caused in checking or recognizing the trespasser and a possibility of error is still left to forecast the direction to which the trespasser would go ahead.

The present invention has been made in view of the above circumstances, and it is an object of the present invention to provide a monitoring apparatus for making it possible for a supervisor to monitor effectively the inside of a building to be monitored, or the like without fail.

### Means for Solving the Problems

A monitoring apparatus of the present invention for monitoring a building by picking up an image of the building by cameras mounted in plural locations of the building to be monitored, includes a storing portion for storing camera parameters necessary for control of a plurality of cameras and structure data of the building; an image synthesizing portion for synthesizing images picked up by the plurality of cameras by means of texture mapping, based on the camera parameters and the structure data of the building stored in the storing portion; and a displaying unit for displaying a synthesized image. According to this configuration, the displaying unit that can paste the picked-up image onto the floor surface, the passage surface, or the wall surface of the building by virtue of the texture mapping based on the building structure data and display the resultant image is provided. Therefore, the supervisor can grasp intuitively at a glance which place of the inside of the building is monitored by each image.

Also, in the monitoring apparatus of the present invention, the plurality of cameras have a night-vision near infrared imaging function, and the system further includes a plurality of night-vision near infrared illuminating units provided to the inside of the building; a near infrared illumination controlling unit for controlling the plurality of night-vision near infrared illuminating units respectively individually; a reflecting marker provided to the inside of the building; and a correcting unit for correcting the camera parameters by analyzing a plurality of picked-up images while turning ON/OFF the plurality of near infrared illuminating units individually. According to this configuration, even when the camera is moved or the number of cameras is increased, a function of the displaying unit to paste the picked-up image onto the building structure data by means of the texture mapping and display a resultant image can be easily realized.

Also, in the monitoring apparatus of the present invention, shooting areas are partitioned in the building by a plurality of floors, and the system further includes a sensing unit for sensing presence/absence of an abnormality in the building from the images picked up by the plurality of cameras; and an image selecting unit for selecting images from the plurality of cameras on a floor, on which the camera that picked up the image from which the abnormality is sensed is mounted, from the picked-up images. According to this configuration, the images from the cameras mounted only on the floor from which the abnormality is sensed can be selected and displayed after the texture mapping is applied. Therefore, the missing of the abnormal area due to the disturbance of the image on other floors can be eliminated and thus exact monitoring can be attained.

Also, in the monitoring apparatus of the present invention, a part or all of the plurality of cameras have a function for controlling an attitude and an angle of view, the cameras having the function have a means for transmitting attitude information and angle-of-view information detected at a point of time of shooting together with the picked-up image, and the displaying unit has a means that pastes the picked-up image onto the building structure data by a texture mapping based on the attitude information and the angle-of-view information transmitted and then displays a resultant image. According to this configuration, positions and attitudes of the cameras that pick up the images are synthesized on the data concerning the building structure and displayed. Therefore, the supervisor can grasp intuitively at a glance which place of the inside of the building is monitored by each image.

Also, in the monitoring apparatus of the present invention, the sensing unit for sensing the presence/absence of the abnormality in the building from the images picked up by the plurality of cameras is provided, a part of the plurality of cameras has a function of controlling the attitude and the angle of view, and a function of presenting preferentially control interfaces of the cameras that pick up the images from which the abnormality is sensed and the cameras, which have the function of controlling the attitude and the angle of view and are mounted near the cameras that pick up the images from which the abnormality is sensed, to a supervisor is provided. According to this configuration, the control interfaces of the camera which are positioned near the location where the abnormality is sensed and whose attitude and angle of view can be controlled are presented preferentially to the supervisor. Therefore, the supervisor can easily check the abnormality.

### Advantages of the Invention

According to the present invention, since the supervisor can monitor effectively the images of a number of surveillance cameras in the complicated facilities without fail and also the images near the sensed location are selected and synthesized in the display when the trespasser, or the like is sensed, the monitoring apparatus that has less possibility to miss the trespasser can be provided. Also, when the movable cameras that can pick up the position where the trespasser is sensed are provided, the interface capable of selecting such movable cameras and controlling preferentially such movable cameras is provided, and therefore the monitoring apparatus that can check the trespasser in detail quickly can be provided. In this manner, since the images of a large number of surveillance cameras can be monitored effectively and surely in the large-scale and complicated building, the monitoring apparatus that needs a small human obligation and small members to monitor, and requires a small running cost can be provided.

### Brief Description of the Drawings

**[FIG.1]** A configurative block diagram showing a monitoring apparatus according to a first embodiment of the present invention.
[FIG.2] An explanatory view showing the synthesis of wire frames in the first embodiment.
[FIG.3] An explanatory view showing a situation that images picked up by video cameras are synthesized by the texture mapping in the first embodiment.
[FIG.4] A view showing a situation that structure data of a building are picked up by the monitoring apparatus according to the first embodiment, wherein (A) is an explanatory view showing the overall inside of a building having multi-layered floors, and (B) is an explanatory view showing a situation that only an image of the floor designated by the floor designating instruction is displayed.
[FIG.5] A configurative block diagram showing a monitoring apparatus according to a second embodiment of the present invention.
[FIG.6] An explanatory view showing structure data of the building on which near infrared cameras having a radio transmitting unit that can be moved to another place are mounted in the second embodiment of the present invention.
[FIG.7] An explanatory view showing markers R1 to R4 in an imaging range in the second embodiment of the present invention.
[FIG.8] A configurative block diagram showing a monitoring apparatus according to a third embodiment of the present invention.
[FIG.9] An explanatory view showing images projected onto floor surfaces of respective floors constituting the building institution in the third embodiment.
[FIG. 10] (A) an explanatory view showing the floor, which is designated by the floor information, out of respective floors constituting the building institution, and (B) an explanatory view showing a situation that the texture mapping is executed by setting up screens in positions indicated by the moving target sensing position information.
[FIG.11] A configurative block diagram showing a monitoring apparatus according to a fourth embodiment of the present invention.
[FIG.12] A configurative block diagram showing a monitoring apparatus according to a fifth embodiment of the present invention.
[FIG.13] An explanatory view showing a display example on a displaying unit of the monitoring apparatus according to the fifth embodiment of the present invention.

### Description of Reference Numerals and Signs

- 1: camera (video camera, near infrared camera)
- 1A, 1C, 1E: fixed camera
- 1G, 1H, 1I: movable camera
- 11: radio transmitting unit
- 12: near infrared LED
- 13: near infrared illumination control system
- 2: storing portion
- 3: image synthesizing portion (image synthesizing unit)
- 31: calibrator
- 32: floor synthesizing portion
- 33: moving target sensing portion
- 4: displaying unit
- 5: interface (area/designated direction controlling unit)
- 6: interface (movable camera controlling unit)
- C1, C2: rotating instruction
- C3: floor designating instruction
- D1: camera parameter data
- D2: building structure data
- D3: building internal data
- D4: directional data
- I1: synthesized image signal
- I2: selected image signal
- L1, L2: position
- M: supervisor
- P1 to P3: image
- P4: moving target image
- P5: synthesized image
- P6: movable camera image
- R: near infrared reflecting marker
- S: screen
- YF: wire frame
- α: area obtained by the back projection

### Best Mode for Carrying Out the Invention

Embodiments of the present invention will be explained in detail with reference to the accompanying drawings hereinafter.

### (First Embodiment)

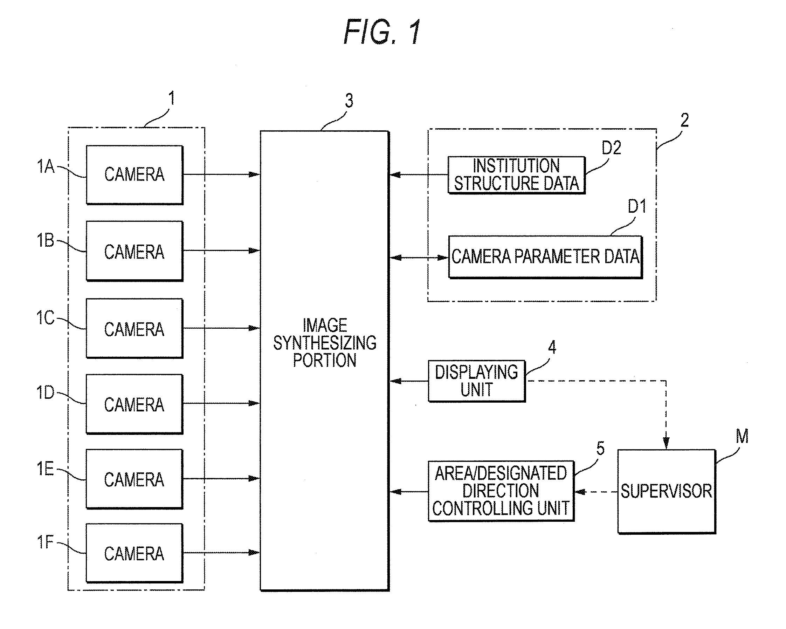

FIG.1 shows a monitoring apparatus according to a first embodiment of the present invention. This monitoring apparatus includes a plurality of video cameras 1 mounted in the building to be monitored, a storing portion 2 for storing camera parameter data D1 and institution structure data D2, an image synthesizing portion 3 constituting an image synthesizing unit for synthesizing picked-up images based on the data D1, D2 using image information input from the video camera 1, a displaying unit 4 for displaying an output image from the image synthesizing portion 3, and an interface 5 serving as a controlling unit by which a supervisor M controls displayed areas in the building near the displaying unit 4 and also controls the area and the designated direction when he or she watches the structure data.

The video camera 1 in the present embodiment consists of six cameras from a first video camera 1A to a sixth video camera 1 F in total. Outputs of these video cameras are connected to inputs of the image synthesizing portion 3 to output image information to the image synthesizing portion 3 respectively.

The storing portion 2 stores information necessary for the camera control such as angle of view, shooting direction, etc. of the video cameras 1A to 1E as the camera parameter data D1, information of the inside of a building necessary for the camera shooting such as room arrangement of the inside of the monitored building, arrangement of internal equipments, etc. as the institution structure data D2, and the like. The storing portion 2 is connected electrically to the image synthesizing portion 3.

The image synthesizing portion 3 synthesizes the picked-up images by applying the texture mapping to the surface of a floor, a passage, or a wall of the building. Here, the "texture mapping" means that the image is pasted to express a texture of a surface of the object in three-dimensional computer graphics.

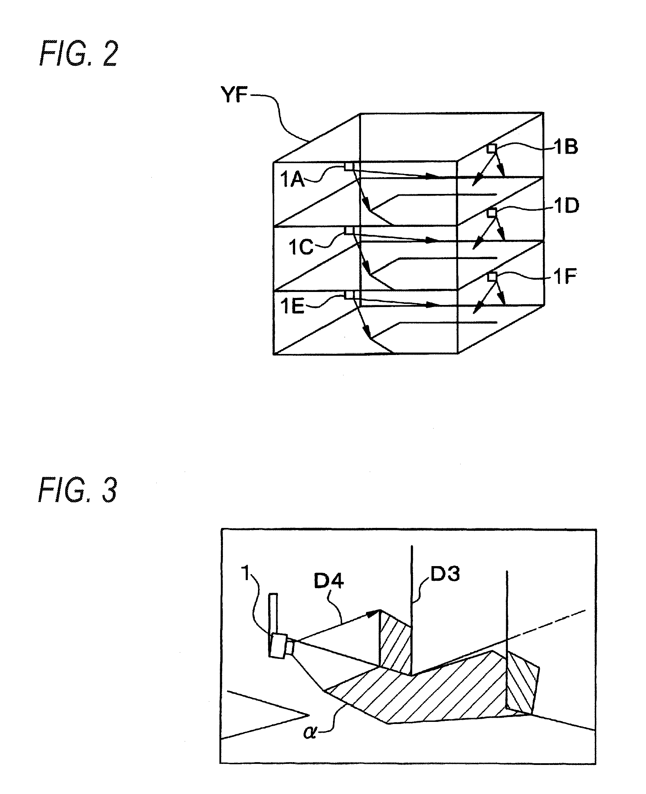

Next, an operation of the monitoring apparatus according to the present embodiment will be explained with reference to FIG.2 to FIG.4 hereunder.

First, as shown in FIG.2, the image synthesizing portion 3 synthesizes wire frames YF of a schematic structure of the building by using the institution structure data D2. Then, the image synthesizing portion 3 synthesizes positions of respective cameras, angle of view, direction, etc. on the wire frames YF based on the camera parameter data D1. In addition, the image synthesizing portion 3 synthesizes images picked up by respective cameras, i.e., as shown in FIG.3, pastes the images picked up by the video camera 1 onto an area α, which is obtained by the back projection along directional data D4 of the camera parameter, as building internal data D3 such as floor surface data, passage surface data, wall surface data, etc. of the building by applying the texture mapping. Here, the "wire frame" is one of stereographic expressing methods used in handling the three-dimensional graphics on the computer. The approach of expressing the solid figure only by lines representing contours, for example, may be listed. For example, a cube, and the like are depicted only by sides and a curved surface, and the like are depicted by reticulated lines. In such case, there can be achieved advantages that an amount of required information is small and figures can be drawn at a high speed. Also, the "back projection" means herein the operation that projects virtually the images picked up by the camera onto the floor surface data, etc. in the opposite direction, although the image picked up by the camera is formed essentially by projecting a light reflected from the subject in the real world onto an imaging face such as CCD, or the like via a lens.

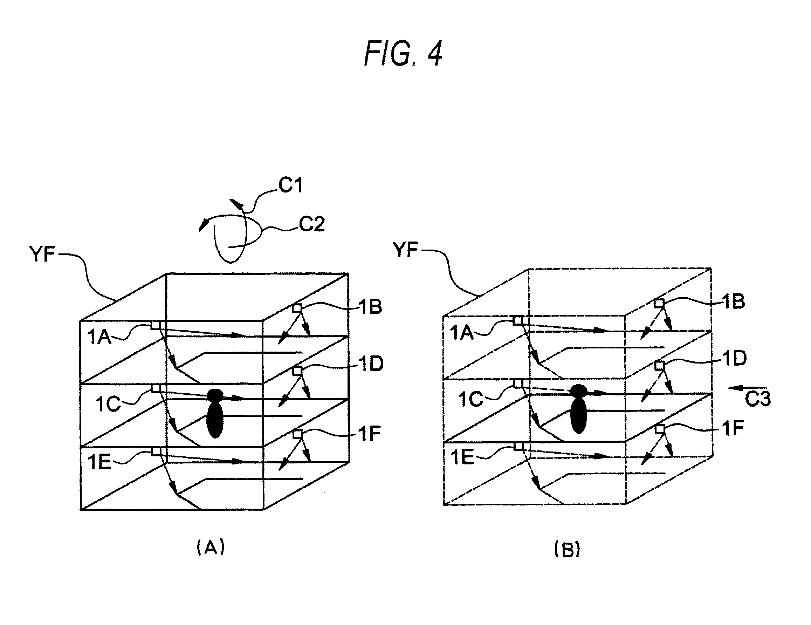

In this case, as shown in FIG.4(A), the supervisor M can control freely the direction, along which such supervisor views the building structure data, by giving rotating instructions C1, C2 via the interface 5. Also, in case the building has the multi-layered floor, sometimes it is difficult for the supervisor to watch the lower floor depending upon the viewing direction because the image of the upper floor screens the image of the lower floor from view. Therefore, as shown in FIG.4(B), the supervisor M can paste only the image of the video camera 1 to the building structure data by means of the texture mapping by giving the floor designating instruction C3 via the interface 5, and can display the resultant image.

With the above configuration, the monitoring apparatus of the present embodiment has a displaying unit that can paste the picked-up image onto the floor surface, the passage surface, or the wall surface of the building by virtue of the texture mapping based on the building structure data and display the resultant image. For this reason, the supervisor M can grasp intuitively at a glance which place of the inside of the building is monitored by each image. As a result, even though the building is enlarged in scale or becomes complicated, or the number of cameras is increased, the supervisor M can monitor effectively the inside of the building without fail.

### (Second Embodiment)

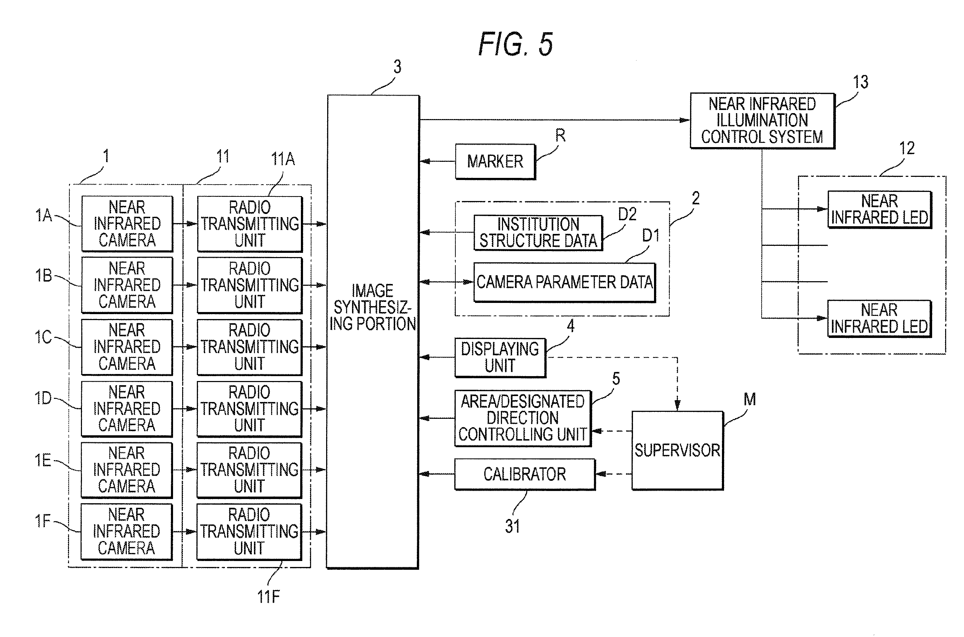

Next, a second embodiment of the present invention will be explained with reference to FIG.5 hereunder. In the present embodiment, the same reference symbols are affixed to the same portions as those in the first embodiment, and thus their redundant explanation is avoided herein.

As shown in FIG.5, unlike the first embodiment, a monitoring apparatus according to a second embodiment of the present invention employs a near infrared camera 1 as the camera mounted in the building. Also, a radio transmitting unit 11 is provided to each near infrared camera, and the picked-up image and lens and angle-of-view data peculiar to each near infrared camera 1 are transmitted to the image synthesizing portion 3.

Also, each near infrared camera 1 has a night-vision near infrared imaging function, and a plurality of illumination near infrared LEDs 12 are provided to respective portions of the ceiling of the building to correspond to respective near infrared cameras. Also, in the monitoring apparatus of the present embodiment, a near infrared illumination control system 13 that can turn ON/OFF these plural near infrared LEDs 12 individually is provided. This near infrared illumination control system 13 can be controlled by the image synthesizing portion 3. In addition, in the monitoring apparatus of the present embodiment, a calibrator 31 connected to the image synthesizing portion 3 is provided as a means for adjusting the image synthesizing portion 3 to the best condition. A near infrared reflecting marker R is provided to plural locations of the passage and the floor in the building.

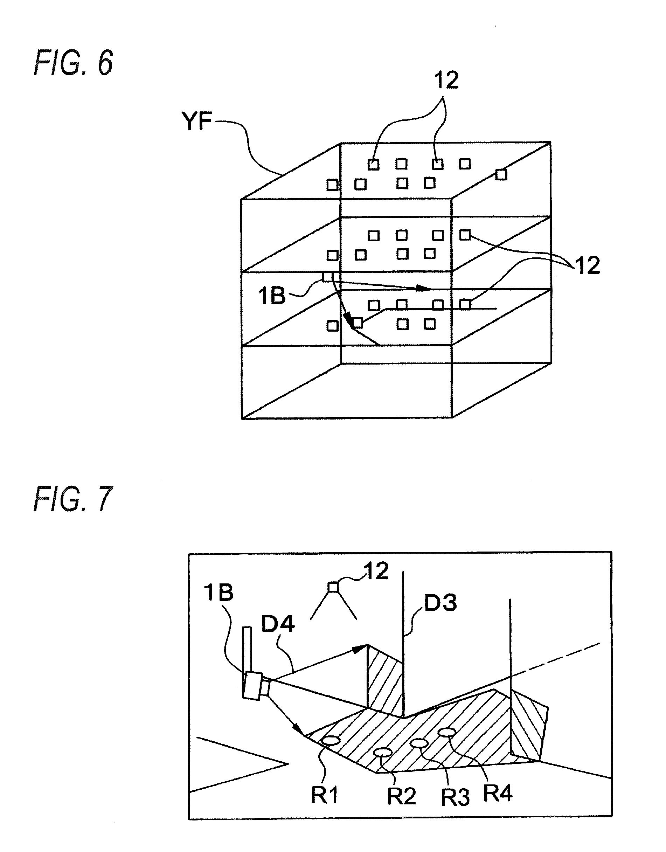

Next, an operation of the monitoring apparatus according to the present embodiment will be explained with reference to FIG.6 and FIG.7 hereunder.

The monitoring apparatus of the present embodiment executes almost similar operations to the first embodiment. However, as shown in FIG.6, for example, the near infrared camera 1 B can be easily moved to another place since the radio transmitting unit 11 is provided to the near infrared camera 1.

When the camera is moved in such manner, the supervisor M gives the calibration instruction to the image synthesizing portion 3 by the calibrator 31. At this time, the image synthesizing portion 3 checks the images picked up by the near infrared cameras 1 at that time by turning ON/OFF a plurality of near infrared LEDs 12 individually via the near infrared illumination control system 13, and thus decides that the camera picks up the image in the areas that the near infrared LEDs 12 illuminate. Also, as shown in FIG.7, an attitude of the camera 1B and the imaging direction D4 are measured by sensing markers R1 to R4 in an imaging range from the image. The camera parameter data D2 can be corrected based on the result.

With the above configuration, even when the camera is moved or the number of cameras is increased, like the first embodiment, a function of the displaying unit 4 to paste the picked-up image onto the floor surface, the passage surface, or the wall surface of the building based on the building structure data D1 by means of the texture mapping and display the resultant image can be easily realized. Therefore, even in the structure in which a layout of the building such as an exhibition hall, a warehouse, or the like is changed frequently, the function of the present invention can be fulfilled satisfactorily.

In this case, in order to to specify the near infrared LED 12 that illuminates the shooting range by turning ON or OFF the near infrared LEDs 12, images of m ON/OF patterns are enough where
n<2m,
m is an integer, and
n is the number of illuminations. Also, it can be prevented that the near infrared reflecting makers R spoil the view in the building if they are made inconspicuous in the visible light.

### (Third Embodiment)

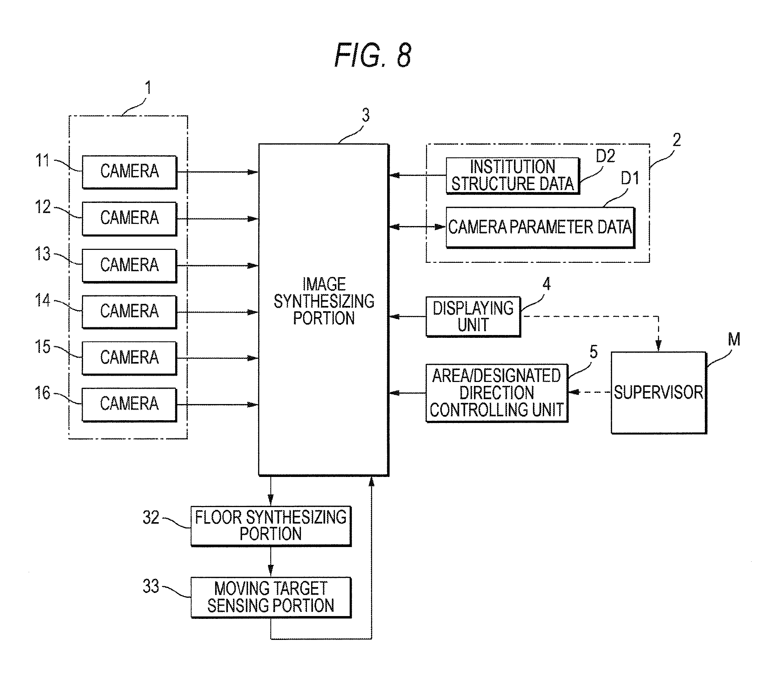

Next, a third embodiment of the present invention will be explained with reference to FIG.8 hereunder. In the present embodiment, the same reference symbols are affixed to the same portions as those in the first embodiment, and thus their redundant explanation is avoided herein.

As shown in FIG.8, unlike the first embodiment, in a monitoring apparatus according to the present embodiment, a floor synthesizing portion 32 and a moving target sensing portion 33 are provided to the image synthesizing portion 3. The floor synthesizing portion 32 synthesizes images projected onto the surfaces of respective floors constituting the facilities of the building. The moving target sensing portion 33 senses the moving target in the synthesized image that is projected onto the surfaces of the floors by the floor synthesizing portion 32.

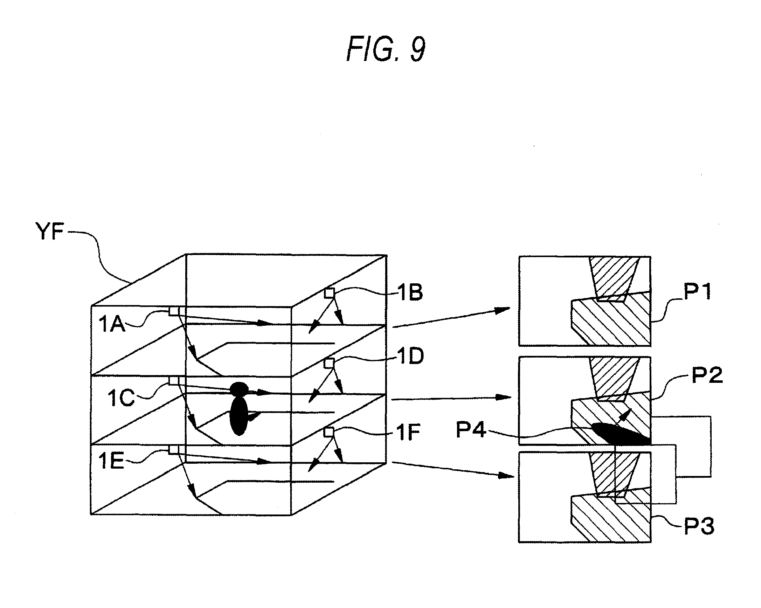

More particularly, the floor synthesizing portion 32 synthesizes images P1 to P3 that are projected onto the surfaces of respective floors constituting the facilities of the building (see FIG.9), and is connected to the output of the image synthesizing portion 3. Also, the input of the moving target sensing portion 33 is connected to the output of the floor synthesizing portion 32 and also the output is connected to the input of the image synthesizing portion 3.

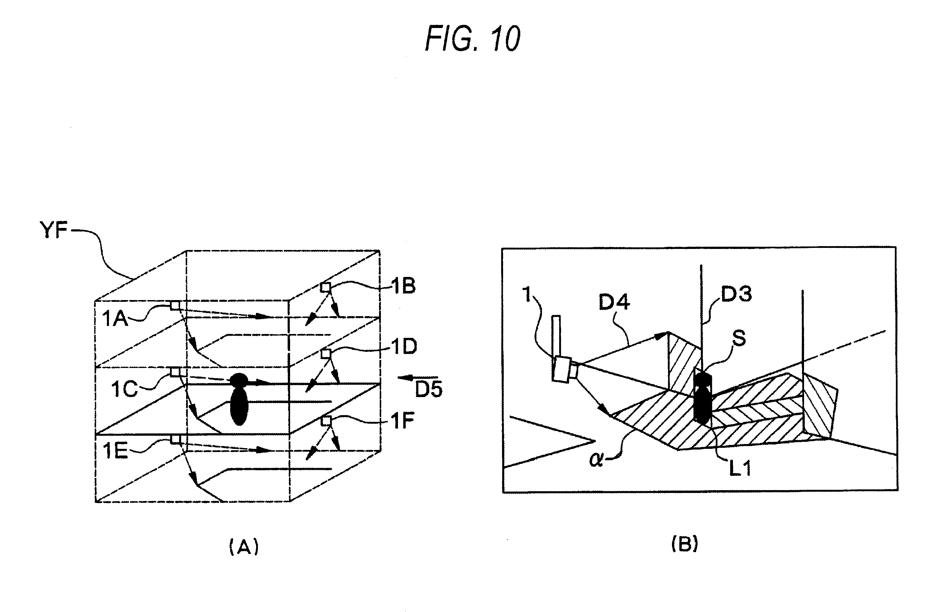

Next, an operation of the monitoring apparatus according to the present embodiment will be explained with reference to FIG.9 and FIG.10 hereunder. Also, the monitoring apparatus of the present embodiment executes almost similar operations to the first embodiment. In this case, since the floor synthesizing portion 82 and the moving target sensing portion 83 are provided to the image synthesizing portion 3, floor information D5 (see FIG.10 (A)) and moving target sensing position information (not shown) are fed back to the image synthesizing portion 3 when an image P4 of the moving target is sensed, as shown in FIG.9.

Then, as shown in FIG.10 (A), only the image picked up by the camera on the floor designated by the floor information D5 is synthesized with the building structure data D2 by the texture mapping in the image synthesizing portion 3. Also, as shown in FIG.10 (A), the texture mapping is executed by setting up a screen S in a position L1 indicated by the moving target sensing position information (not shown) at that time. Therefore, such a disadvantage can be prevented that the image of a trespasser is fall into the surface of the floor, or the like in the synthesis.

According to the present embodiment, with the above configuration, the monitoring apparatus can sense automatically the abnormality and also the image of the floor from which the abnormality is sensed is displayed. Therefore, the supervisor can look out over the overall floor on which something trouble happens and can easily check the trespasser. Also, even when the trespasser moves into the shooting range of another camera, the supervisor can look out across the overall floor on which something trouble happened and never loses sight of the trespasser.

Also, since the synthesized image of the floor obtained by the floor synthesizing portion 32 is employed to sense the moving target, the waste caused when the shooting range of respective cameras overlap with each other can be reduced and the sensing can be done effectively. Also, since the synthesized images projected onto the surfaces of respective floors are employed, the supervisor can easily identify the position when the moving target is sensed.

### (Fourth Embodiment)

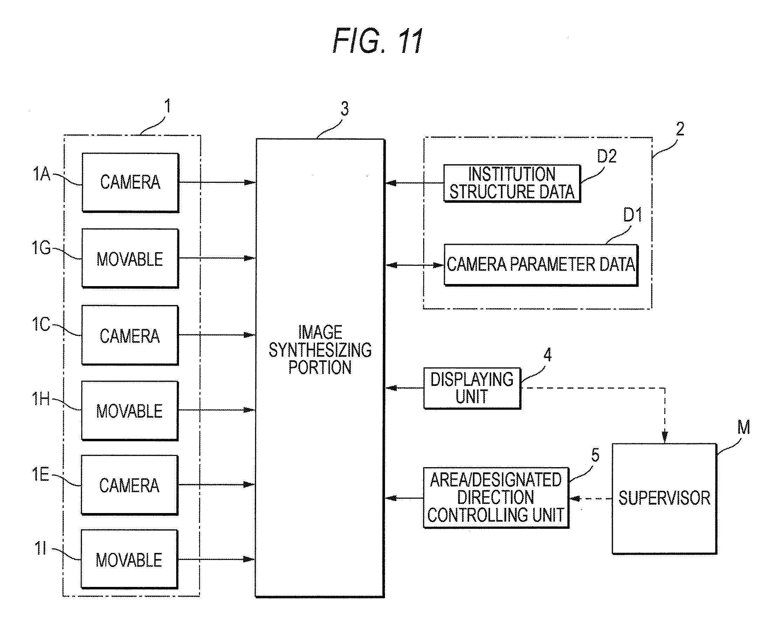

Next, a fourth embodiment of the present invention will be explained with reference to FIG.11 hereunder. In the present embodiment, the same reference symbols are affixed to the same portions as those in the first embodiment, and thus their redundant explanation is avoided herein.

In the monitoring apparatus of the present embodiment, unlike the first embodiment, movable cameras 1G, 1H, 1I that can execute pan, tilt, zoom operations are employed as a part of the camera 1. Camera parameter information detected at a point of time of shooting as well as the picked-up images are sent to the image synthesizing portion 3 from these movable cameras 1G, 1H, 1I. Then, the image synthesizing portion 3 updates sequentially the camera parameter data D1 based on these sent camera parameter information, and employs the data in the texture mapping to pate the picked-up image onto the floor surface, the passage surface, and the wall surface of the building.

According to the present embodiment, since the supervisor can monitor the inside of the building by using the movable cameras 1G, 1H, 1I that can execute the pan, tilt, zoom operations, the monitored area can be widened much more. Also, when merely the images picked up by the movable cameras 1G, 1H, 1I that can execute the pan, tilt, zoom operations are employed, it is difficult for the supervisor to grasp which place is being picked up by the camera, rather than the case where the fixed cameras 1A, 1C, 1E are employed. Therefore, the present embodiment can improve such disadvantage and is more effective for the security.

### (Fifth Embodiment)

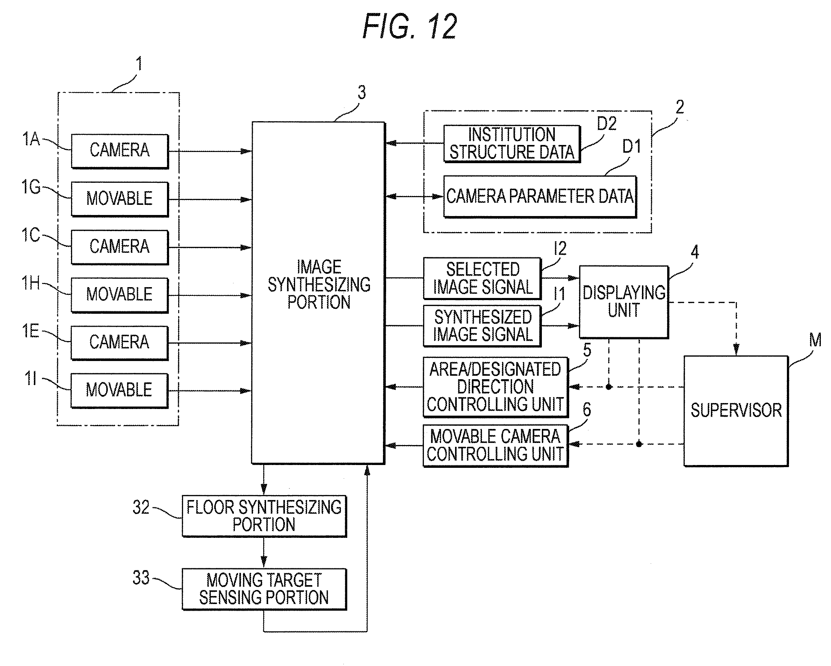

Next, a fifth embodiment of the present invention will be explained with reference to FIG.12 hereunder. In the present embodiment, the same reference symbols are affixed to the same portions as those in the first and third embodiments, and thus their redundant explanation is avoided herein.

In the monitoring apparatus of the present embodiment, like the third embodiment, a plurality of video cameras 1, the storing portion 2, the image synthesizing portion 3, the displaying unit device 4, and the interface 5 are provided. Further, the floor synthesizing portion 32 for synthesizing the images projected onto the surfaces of the floors constituting the foregoing building, and the moving target sensing portion 33 for sensing the moving target in the synthesized images projected onto the surfaces of the floors are provided to the image synthesizing portion 3.

In the monitoring apparatus of the fifth embodiment, like the fourth embodiment, the movable cameras 1G, 1H, 1I that can execute pan, tilt, zoom operations are employed as a part of the camera 1. The camera parameter information detected at a point of time of shooting as well as the picked-up images are sent to the image synthesizing portion 3 from these movable cameras 1G, 1H, 1I. Then, the image synthesizing portion 3 updates sequentially the camera parameter data D1 based on these sent camera parameter information, and employs the data in the texture mapping to pate the picked-up image onto the floor surface, the passage surface, and the wall surface of the building.

Further, in the monitoring apparatus of the fifth embodiment, an interface 6 that can be controlled by the supervisor M is provided. This interface 6 selects the movable cameras 1G, 1H, 1I that can pick up the image of the sensed moving target position and controls the movable cameras 1G, 1H, 1I in the sensed moving target position direction when the moving target sensing portion 33 senses the moving target, and also presents preferentially the selected movable cameras 1G, 1H, 1I to the supervisor.

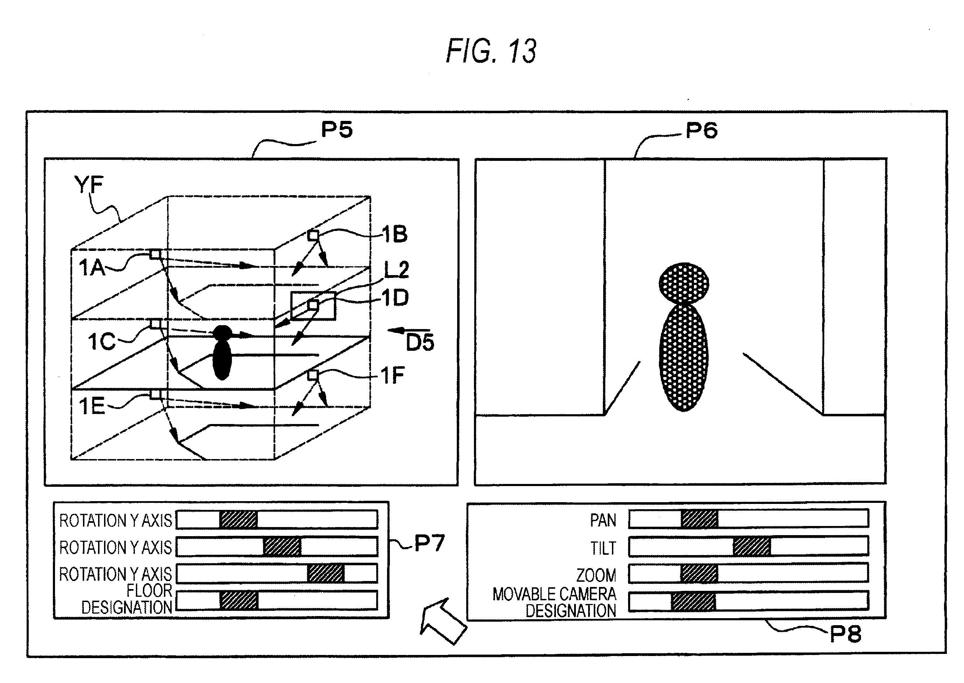

Also, a synthesized image signal I1 obtained by the texture mapping and an image signal I2 of the selected movable camera are output simultaneously from the image synthesizing portion 3 to the displaying unit 4. Here, an example displayed on the displaying unit 4 is shown in FIG.13.

In the display example in FIG.13, in addition to the synthesized image obtained by the texture mapping and the image of the selected movable camera, respective parameter states of the interface 5 via which the supervisor M can control the direction along which the supervisor can view the building structure data and the interface 6 via which the supervisor M can control the movable cameras 1G, 1H, 1I are displayed simultaneously on the display screen of the displaying unit 4.

When no moving target is sensed, images of the floor or the movable cameras 1G, 1H, 1I designated by the supervisor M are displayed. In contrast, when the moving target is sensed, the movable camera that can pick up the images of the sensed floor and the moving target is designated automatically and respective synthesized images P5 and a image P6 picked up by the selected movable camera are displayed. In particular, a position L2 of the selected movable camera in the synthesized images P5 is highlighted. Therefore, the supervisor M can check in detail the moving target by using the zoom while controlling the selected movable cameras 1G, 1H, 1I.

Therefore, according to the present embodiment, with the above configuration, the supervisor can grasp intuitively the position where the moving target is sensed in the building and also the supervisor can check in detail the position quickly by the movable cameras 1G, 1H, 1I. As a result, the supervisor never loses sight of the moving target, and the more effective and sure monitoring can be carried out.

The present invention is explained in detail with reference to the particular embodiments. But it is apparent for those skilled in the art that various variations and modifications can be applied without departing from a spirit and a scope of the present invention.

This application is based upon Japanese Patent Application (Patent Application No.2004-293345) filed on October 6, 2004, the contents of which are incorporated herein by reference.

### Industrial Applicability

The present invention has a plurality of cameras for picking up the images of the inside of the building to be monitored, and the displaying unit for applying the texture mapping to the picked-up images based on the camera parameters of a plurality of cameras and the building structure data and displaying the resultant image, and also the supervisor can monitor effectively the inside of the building without fail. Therefore, such a drawback can be removed that the supervisor is hard to understand intuitively which place of the building is monitored by the displayed monitoring image, and there is no possibility that error or missing may be caused in checking or recognizing the trespasser and a possibility of error is still left to forecast the direction to which the trespasser would go ahead. As a result, the present invention is suitable for the surveillance camera system to ensure the security.

## Claims

1. A monitoring apparatus for monitoring a building by picking up an image of the building by cameras mounted in plural locations of the building to be monitored, comprising:
a storing portion that stores camera parameters necessary for controlling a plurality of cameras and structure data of the building;
an image synthesizing portion that synthesizes images picked up by the plurality of cameras in texture mapping, based on the camera parameters and the structure data of the building stored in the storing portion; and
a displaying unit that displays a synthesized image.

2. The monitoring apparatus according to claim 1, wherein the plurality of cameras have a night-vision near infrared imaging function, and
the monitoring apparatus further comprising:
a plurality of night-vision near infrared illuminating units that are provided to the inside of the building;
a near infrared illumination controlling unit that controls the plurality of night-vision near infrared illuminating units respectively individually;
a reflecting marker that are provided to the inside of the building; and
a correcting unit that corrects the camera parameters by analyzing a plurality of images which are picked-up while turning ON/OFF the plurality of near infrared illuminating units individually.

3. The monitoring apparatus according to claim 1, wherein shooting areas are partitioned in the building by a plurality of floors, and
the monitoring apparatus further comprising:
a sensing unit that senses presence/absence of an abnormality in the building based on the images picked up by the plurality of cameras; and
an image selecting unit that selects images picked-up by the plurality of cameras on a floor, on which the camera, which picks up the image from which the abnormality is sensed, is mounted, from the picked-up images.

4. The monitoring apparatus according to any one of claims 1 to 3, wherein a part or all of the plurality of cameras have a function for controlling an attitude and an angle of view;
wherein the cameras having the function includes a unit which transmits attitude information and angle-of-view information detected at a point of time of shooting together with the picked-up image; and
wherein the displaying unit includes a unit which pastes the picked-up image onto the building structure data by a texture mapping based on the attitude information and the angle-of-view information transmitted and displays a resultant image.

5. The monitoring apparatus according to any one of claims 1 to 4, wherein the sensing unit which senses the presence/absence of the abnormality in the building from the images picked up by the plurality of cameras is provided;
wherein a part of the plurality of cameras has a function of controlling the attitude and the angle of view; and
wherein a function of preferentially providing control interfaces of the cameras mounted near a camera which picks up the image from which the abnormality is sensed, the cameras having the function of controlling the attitude and the angle of view, to a supervisor is provided.
